# EUROPEAN PATENT APPLICATION

(11) **EP 3 173 854 A1**
(43) Date of publication of application: **31.05.2017**
(21) Application number: 16199602.0
(22) Date of filing: 18.11.2016
(51) Int. Cl.: G02F 1/133, G02F 1/1362, G06F 3/041, G01S 17/00

(54) **LIQUID CRYSTAL DISPLAY COMPONENT AND ELECTRONIC DEVICE**

(30) Priority: 26.11.2015 CN 201510835111
(71) Applicant: Xiaomi Inc., Beijing 100085 (CN)
(72) Inventor: LI, Guosheng, Haidian District, Beijing 100085 (CN); LIU, Anyu, Haidian District, Beijing 100085 (CN); TAO, Jun, Haidian District, Beijing 100085 (CN)
(74) Representative: Sadler, Peter Frederick

(57) **Abstract**

A liquid crystal display (LCD) component and an electronic device are provided in the disclosure, which belongs to the technical field of display The LCD component may include: an upper substrate (110, 210); a lower substrate (120, 220) arranged to be opposite and parallel to the upper substrate (110, 210); a liquid crystal layer (130, 230) encapsulated between the upper substrate (110, 210) and the lower substrate (120, 220); an upper polarizer (140, 240) attached to a surface of the upper substrate which is not adjacent to the liquid crystal layer; and a lower polarizer (150, 250) attached to a surface of the lower substrate (120, 220) which is not adjacent to the liquid crystal layer (130, 230). [FIG. 1]

## Description

### FIELD

The present disclosure relates to the technical field of displays, and more particularly, to a liquid crystal display (LCD) component and an electronic device.

### BACKGROUND

An electronic device may be equipped with an optical proximity sensor which may detect the presence of a nearby object for the electronic device.

In the related technology, the optical proximity sensor is disposed in an aperture opened on the upper margin of the front surface of the electronic device's housing. For example, for a mobile phone, the optical proximity sensor is generally disposed in an aperture opened on the surface of the mobile phone's housing on which the display screen is located.

### SUMMARY

In view of the fact in related arts, a method and device for fingerprint recognition are provided by the present disclosure. The technical solutions are set forth as follows.

According to a first aspect of embodiments of the present disclosure, a liquid crystal display (LCD) component is provided. The LCD component may include: an upper substrate; a lower substrate arranged to be opposite and parallel to the upper substrate; a liquid crystal layer encapsulated between the upper substrate and the lower substrate; an upper polarizer attached to a surface of the upper substrate which is not adjacent to the liquid crystal layer; and a lower polarizer attached to a surface of the lower substrate which is not adjacent to the liquid crystal layer; the liquid crystal display component further comprising: at least one optical proximity sensor and a control chip; wherein the at least one optical proximity sensor is arranged between the upper polarizer and the lower polarizer, and each optical proximity sensor is electrically connected with the control chip respectively.

Optionally, the upper substrate may include: an upper glass substrate and a color filter (CF); wherein the lower surface of the upper glass substrate is adjacent to the liquid crystal layer; the CF is attached to the upper surface of the upper glass substrate; the CF comprises pixel color blocks and a first black matrix distributed among the pixel color blocks.

Optionally, the lower substrate may include: a lower glass substrate and a thin film transistor (TFT) array; wherein the upper surface of the lower glass substrate is adjacent to the liquid crystal layer; the TFT array and a second black matrix distributed among the TFT array are arranged on the lower surface of the lower glass substrate.

Optionally, the optical proximity sensor may include at least one transmission terminal and at least one reception terminal; wherein the at least one transmission terminal of the optical proximity sensor is arranged on at least one of the first black matrix and the second black matrix, and the at least one reception terminal of the optical proximity sensor is arranged on at least one of the first black matrix and the second black matrix.

Optionally, the optical proximity sensor is connected with the control chip via a wire, and the wire is also arranged on the first black matrix or the second black matrix.

Optionally, there are n optical proximity sensors, and the n optical proximity sensors are arranged evenly and dispersedly, wherein n≥2.

Optionally, the crystal display component may further include: at least one backlight source; the at least one backlight source is electrically connected with the control chip.

Optionally, a display area corresponding to the liquid crystal display component is divided into m display blocks, each of the display blocks is arranged with at least one backlight source correspondingly, and each of the display blocks is arranged with at least one optical proximity sensor correspondingly, wherein m≥2.

According to a second aspect of embodiments of the present disclosure, an electronic device is provided. The electronic device may include the LCD component of the first aspect.

Embodiments of the present disclosure may provide at least some of the following beneficial effects.

With the arrangement of the optical proximity sensor arranged between the upper polarizer and the lower polarizer, the LCD component provided by the present disclosure may enable the optical proximity sensor not to be confined to some aperture for proximity detection of an object, thus there is no need for opening apertures for optical proximity sensors separately anymore. Without the aperture, the size of the front panel of the electronic device is saved and the overall design aesthetic of the electronic device is improved.

In addition, the at least one transmission terminal of the optical proximity sensor is arranged on at least one of the first black matrix and the second black matrix, and the at least one reception terminal of the optical proximity sensor is arranged on at least one of the first black matrix and the second black matrix, so as to protect the light transmittance of the LCD panel from being disturbed by the arrangement of the optical proximity sensors, and further ensure the display ability of the LCD panel, and also enable the reception terminal of the optical proximity sensor to not be limited by the transmission angle and the reception angle when receiving the reflected signal of the optical signal transmitted by the transmission terminal. This resolves the problem that the optical proximity sensors cannot detect, within the entire LCD panel of the electronic device, the nearby object due to the angle limitation to the transmission of the optical signal by the transmission terminal of the optical proximity sensor and the reception of the reflected signal by the reception terminal; and achieve the effect of increasing the amount of the reflected signal received by the reception terminal to enable the optical proximity sensor to detect the nearby object within the entire LCD panel.

It is to be understood that the above general description and the following detailed description are merely for the purpose of illustration and explanation, and are not intended to limit the scope of the protection of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a structure schematic diagram illustrating a LCD component according to an exemplary embodiment;
Fig. 2 is a structure schematic diagram illustrating a LCD component according to another exemplary embodiment;
Fig. 3 is a schematic diagram illustrating different arrangements of the pixel color blocks on the color filter (CF) in another exemplary embodiment;
Fig. 4 is a side view of a CF in another exemplary embodiment;
Fig. 5 is a side view of a lower glass substrate according to another exemplary embodiment; and
Fig. 6 is a schematic diagram illustrating a display area corresponding to the LCD component in another embodiment.

### DETAILED DESCRIPTION

Reference will now be made in detail to example embodiments, examples of which are illustrated in the accompanying drawings. The following description refers to the accompanying drawings in which same numbers in different drawings represent same or similar elements unless otherwise described. The implementations set forth in the following description of example embodiments do not represent all implementations consistent with the present disclosure. Instead, they are merely examples of devices and methods consistent with aspects related to the present disclosure as recited in the appended claims.

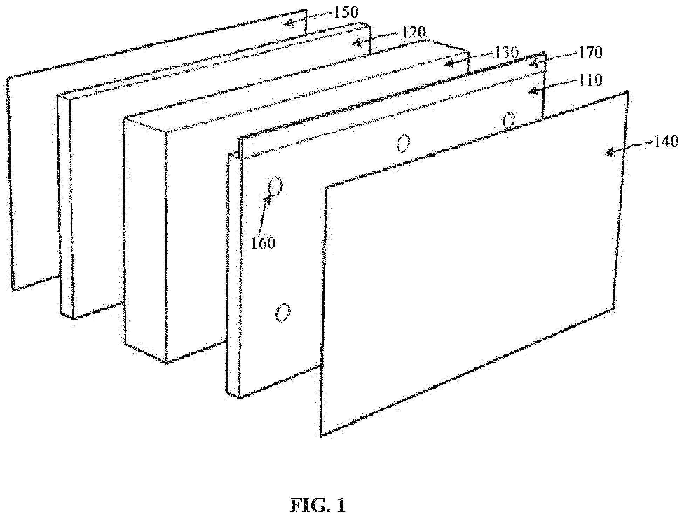

Fig. 1 is a structure schematic diagram illustrating a LCD component according to an exemplary embodiment.

As shown in Fig. 1, the LCD component include: an upper substrate 110; a lower substrate 120 arranged to be opposite and parallel to the upper substrate 110; a liquid crystal layer 130 encapsulated between the upper substrate 110 and the lower substrate 120; an upper polarizer 140 attached to a surface of the upper substrate 110 which is not adjacent to the liquid crystal layer 130; and a lower polarizer 150 attached to a surface of the lower substrate 120 which is not adjacent to the liquid crystal layer 130.

As shown in Fig. 1, the LCD component further includes: at least one optical proximity sensor 160 and a control chip 170; wherein the at least one optical proximity sensor 160 is arranged between the upper polarizer 140 and the lower polarizer 150, and each optical proximity sensor 160 is electrically connected with the control chip 170.

Thus, with the arrangement of the optical proximity sensor arranged between the upper polarizer and the lower polarizer, the LCD component provided by the present disclosure may enable the optical proximity sensor not to be confined to some aperture for proximity detection of an object, thus there is no need for opening apertures for optical proximity sensors separately anymore. Without the aperture, the size of the front panel of the electronic device is saved and the overall design aesthetic of the electronic device is improved.

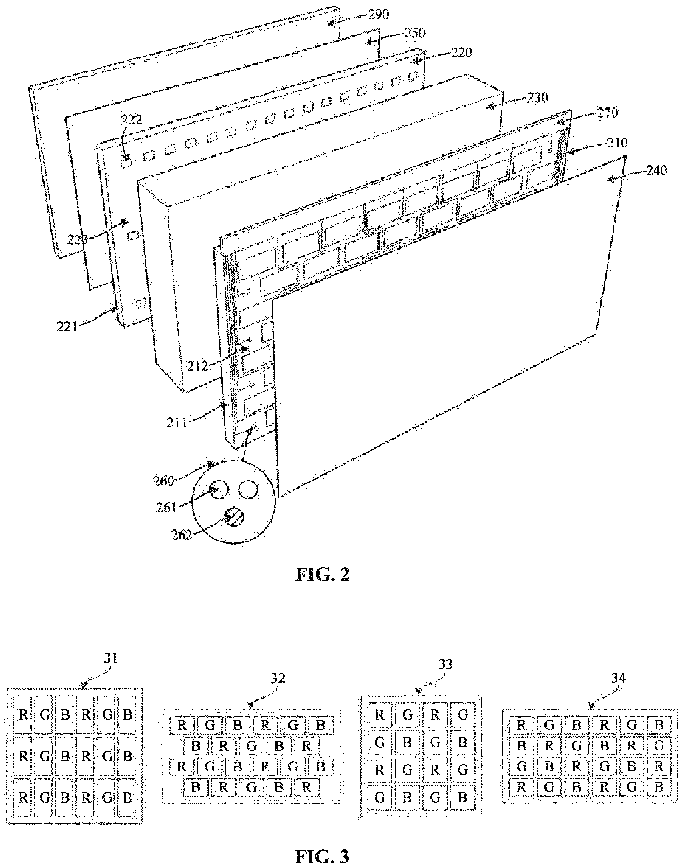

Fig. 2 is a structure schematic diagram illustrating a LCD component according to another embodiment. The LCD component may be the LCD panel of an electronic device, such as a mobile phone, a tablet, a laptop, a smart TV and the like.

As shown in Fig. 2, the LCD component may include: an upper substrate 210; a lower substrate 220 arranged to be opposite and parallel to the upper substrate 210; a liquid crystal layer 230 encapsulated between the upper substrate 210 and the lower substrate 220; an upper polarizer 240 attached to a surface of the upper substrate 210 which is not adjacent to the liquid crystal layer 230; and a lower polarizer 250 attached to a surface of the lower substrate 120 which is not adjacent to the liquid crystal layer 230.

Optionally, as shown in Fig. 2, the upper substrate 210 may include an upper glass substrate 211 and a color filter (CF) 212. The lower surface of the upper glass substrate 211 is adjacent to the liquid crystal layer 230, and the CF 212 is attached to the upper surface of the upper glass substrate 211. The CF 212 enables the LCD panel to present a colorful picture, and the CF 212 has a number of different pixel color blocks corresponding to the three colors of R, G and B arranged thereon. Fig. 3 illustrates different arrangements of the pixel color blocks on the CF in another exemplary embodiment. In the first possible arrangement, as the CF 31 shown in Fig. 3, different pixel color blocks corresponding to the three colors of R, G and B are arranged in strips. In the second possible arrangement, as the CF 32 shown in Fig. 3, different pixel color blocks corresponding to the three colors of R, G and B are arranged in triangles. In the third possible arrangement, as the CF 33 shown in Fig. 3, different pixel color blocks corresponding to the three colors of R, G and B are arranged in squares. In the fourth possible arrangement, as the CF 34 shown in Fig. 3, different pixel color blocks corresponding to the three colors of R, G and B are arranged in mosaic (i.e., in diagonal). The several arrangements shown in Fig. 3 are merely for the purpose of illustration and explanation, and are not intended to limit other possible arrangements.

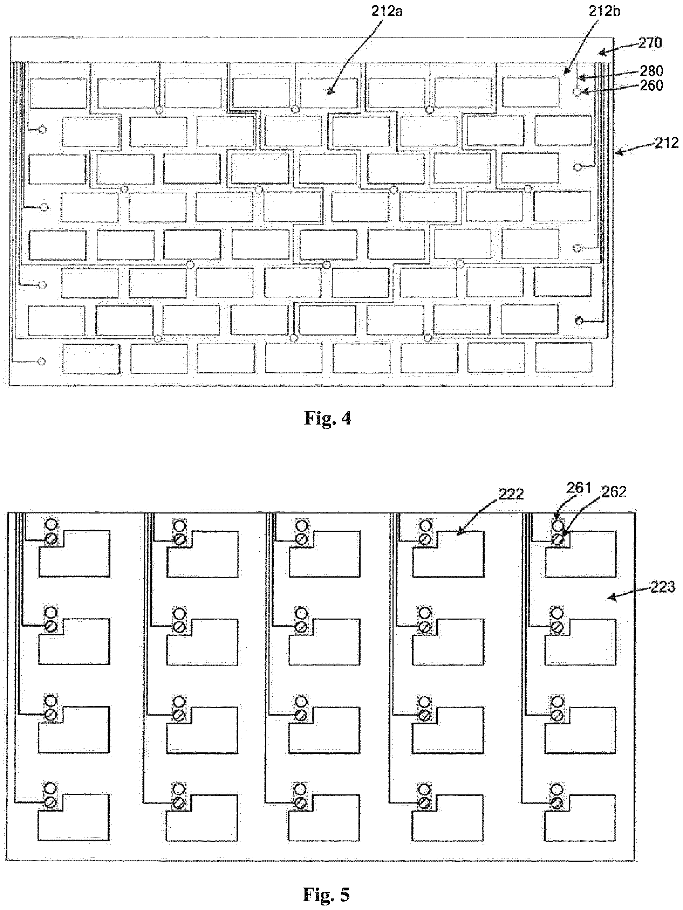

In addition, referring to Fig. 2 combined with Fig. 4, Fig. 4 is a side view of CF 212. CF 212 includes the pixel color blocks 212a and a first black matrix (212b) distributed among the pixel color blocks. The pixel color blocks 212a are the different color blocks corresponding to the three colors of R, G and B. The first black matrix 212b is distributed among the pixel color blocks 212a. The first black matrix 212b is used to prevent the background light from leak, so as to increase the display contrast of the LCD panel, prevent color mixing and increase the color purity.

Optionally, as shown in Fig. 2, the lower substrate 220 includes a lower glass substrate 221 and a thin film transistor (TFT) array 222, wherein the upper surface of the lower glass substrate 221 is adjacent to the liquid crystal layer 230; the TFT array 222 and a second black matrix 223 distributed among the TFT array 222 are arranged on the lower surface of the lower glass substrate 221.

Fig. 5 is a side view of the lower glass substrate 221. The second black matrix 223 is used to prevent the background light from leak, so as to increase the display contrast of the LCD panel, prevent color mixing and increase the color purity.

As shown in Fig. 2, the LCD component further includes: at least one optical proximity sensor 260 and a control chip 270; the optical proximity sensor 260 includes at least one transmission terminal 261 and at least one reception terminal 262.

The transmission terminal 261 of the optical proximity sensor 260 is used to transmit an optical signal, when there is an object approaching, the reception terminal 262 is used to receive a reflected signal; the reflected signal is formed due to the optical signal being stopped by the object. Thus, the electronic device can detect the present of a nearby object by detecting whether the reception terminal 262 of the optical proximity sensor 260 receives the reflected signal.

The optical proximity sensors 260 are arranged between the upper polarizer 240 and the lower polarizer 250, and electrically connected with the control chip 270 respectively. The optical proximity sensors 260 are used to convert the optical signal to an electric signal and provide the electric signal to the control chip 270.

The arrangement of the optical proximity sensors 260 are introduced below.

For example, the optical proximity sensors 260 may be arranged on the upper surface of the lower glass substrate 221, at the moment, the transmission terminal 261 and the reception terminal 262 of each of the optical proximity sensors 260 are arranged on the upper surface of the lower glass substrate 221; or the optical proximity sensors 260 may also be arranged on the CF 212, then the transmission terminal 261 and the reception terminal 262 of each of the optical proximity sensors 260 are arranged on the CF 212, and so on.

Optionally, when there are multiple optical proximity sensors 260, for example, when the number of the optical proximity sensors 260 is n (n≥2), the n optical proximity sensors 260 are arranged evenly and dispersedly. The at least one transmission terminal 261 of each optical proximity sensor 260 is arranged on at least one of the first black matrix 212b and the second black matrix 223, and the at least one reception terminal 262 of each optical proximity sensor 260 is arranged on at least one of the first black matrix 212b and the second black matrix 223.

For example, as shown in Fig. 5, the blank circle represents the transmission terminal 261 of the optical proximity sensor 260, and the shadow circle represents the reception terminal 262 of the optical proximity sensor 260. The at least one transmission terminal 261 and the at least one reception terminal 262 of each optical proximity sensor 260 are all evenly and dispersedly arranged on the second black matrix 223 of the lower glass substrate 221.

For example, the at least one transmission terminal 261 of each optical proximity sensor 260 are all dispersedly arranged on the first black matrix 212b, and the at least one reception terminal 262 are all dispersedly arranged on the second black matrix 223; or the at least one transmission terminal 261 of each optical proximity sensor 260 are all dispersedly arranged on the second black matrix 223, and the at least one reception terminal 262 are all dispersedly arranged on the first black matrix 212b.

For example, the at least one transmission terminal 261 and the at least one reception terminal 262 of each of a part of the optical proximity sensors 260 are evenly and dispersedly arranged on the first black matrix 212b, and the at least one transmission terminal 261 and the at least one reception terminal 262 of each of another part of the optical proximity sensors 260 are evenly and dispersedly arranged on the second black matrix 223.

the at least one transmission terminal 261 of each of a part of the optical proximity sensors 260 are all dispersedly arranged on the first black matrix 212b, and the at least one reception terminal 262 are all dispersedly arranged on the second black matrix 223; and the at least one transmission terminal 261 of each of another part of the optical proximity sensors 260 are all dispersedly arranged on the second black matrix 223, and the at least one reception terminal 262 are all dispersedly arranged on the first black matrix 212b.

The embodiment is not intended to limit the arrangement of the at least on transmission terminal 261 and the at least reception terminal 262 of the optical proximity sensor 260.

By arranging multiple optical proximity sensors 260 and arranging them evenly and dispersedly, detection of presence of a nearby object by the optical proximity sensor 260 is not confined to some aperture any more, but performed in the area of the entire LCD panel of the electronic device. This may solve the problem of reduction of the amount of the reflected signal due to the optical proximity sensor 260 being arranged in an aperture in related art, wherein the reflected signal is received by the reception terminal 262 of the optical proximity sensor 260 and from the optical signal transmitted by the transmission terminal 261. Without the aperture, space of the front panel of the electronic device is saved, the device may be reduced in size, and the overall design aesthetic of the electronic device is improved..

In addition, the transmission terminal 261 and the reception terminal 261 of the optical proximity sensor are arranged on the second black matrix 223 or the first black matrix 212b, so as to protect the light transmittance of the LCD panel from being disturbed by the arrangement of the optical proximity sensor 260, and further ensure the display ability of the LCD panel.

Optionally, referring to Fig. 4, the optical proximity sensor 260 is connected with the control chip 270 via a wire 280, and the wire 280 is also arranged on the first black matrix 212b arranged on the CF 212 or the second black matrix 223 arranged on the lower glass substrate 221. The arrangement of the wire 280 on the first matrix 212b or the second black matrix 223 may protect the light transmittance of the LCD panel from being disturbed by the arrangement of the wire 280, and further ensure the display ability of the LCD panel.

As shown in Fig. 2, the LCD component may further include: at least one backlight source 290. The at least one backlight source 290 is electrically connected with the control chip 270. The backlight source 290 is arranged on the back of the lower polarizer 250 and used to provide a light source behind the LCD panel. The types of the backlight source 290 may include but are not limited to any one of Electro Luminescent (EL), Cold Cathode Fluorescent Lamp (CCFL), Light Emitting Diode (LED) and the like.

In addition, the control chip 270 may be a Microcontroller Unit (MCU) (also called a single chip microcomputer or a single chip), which is a chip level computer. In a possible implementation, for example, a MCU can control the backlight brightness based on the distance between the LCD and a finger calculated by the optical proximity sensors, the reception terminal 261 of each optical proximity sensor 260 collects the reflected signal of the optical signal transmitted by the transmission terminal 260, and the MCU may acquire the reflected signal from each optical proximity sensor 260, perform a computation process to the reflected signal, and determine whether there is a nearby object within a predetermined distance from the LCD panel based on the result of the computation process, and then control the backlight source 290 to shine or not based on the determined result. For example, when the computation result of the MCU is that there is a nearby object within 1 cm from the LCD panel, the MCU controls the backlight source 290 not to shine, and when the computation result of the MCU is there is not a nearby object within 1 cm from the LCD panel, the MCU controls the backlight source 290 to shine.

Optionally, the predetermined distance may not be preset in the LCD, that is, the MCU determines the present of a nearby object when the MCU receives the reflected signal of the reception terminal 262 of the optical proximity sensor 260.

In addition, the display area corresponding to the LCD component may be a complete display area; the display area is arranged with at least one backlight source 290 correspondingly, each of which is used to control the backlight brightness of the entire display area.

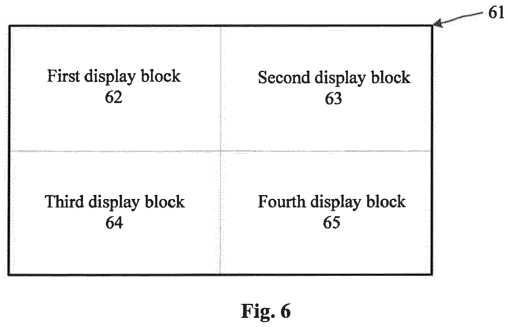

Optionally, as shown in Fig. 6, the display area 61 corresponding to the LCD component is divided into m display blocks (as shown, a first display block 62, a second display block 63, a third display block 64 and a fourth display block 65), each of which is arranged with at least one backlight source 290 and at least one optical proximity sensor 260 correspondingly. For every display block, the corresponding multiple backlight sources 290 are used to control the backlight brightness of the display block independently. For example, if a first backlight source and a first optical proximity source are correspondingly arranged for the first display block 62, and a second backlight source and a second optical proximity source are correspondingly arranged for the second display block 63, the first backlight source is used to control the backlight brightness of the first display block 62 independently based on the reflected signal collected by the reception terminal of the first optical proximity sensor, and the second backlight source is used to control the backlight brightness of the second display block 63 independently based on the reflected signal collected by the reception terminal of the second optical proximity sensor. The flexibility of the backlight control may be improved by dividing the display area corresponding to the LCD panel into multiple display blocks and controlling the backlight brightness of the display blocks in separate blocks.

Thus, with the arrangement of the optical proximity sensor arranged between the upper polarizer and the lower polarizer, the LCD component provided by the present disclosure may enable the optical proximity sensor not to be confined to some aperture for proximity detection of an object, thus there is no need for opening apertures for optical proximity sensors separately anymore. Without the aperture, the size of the front panel of the electronic device is saved and the overall design aesthetic of the electronic device is improved..

In addition, the at least one transmission terminal of the optical proximity sensor is arranged on at least one of the first black matrix and the second black matrix, and the at least one reception terminal of the optical proximity sensor is arranged on at least one of the first black matrix and the second black matrix, so as to protect the light transmittance of the LCD panel from being disturbed by the arrangement of the optical proximity sensors, and further ensure the display ability of the LCD panel, and also enable the reception terminal of the optical proximity sensor to not be limited by the transmission angle and the reception angle when receiving the reflected signal of the optical signal transmitted by the transmission terminal. This resolves the problem that the optical proximity sensors cannot detect, within the entire LCD panel of the electronic device, the nearby object due to the angle limitation to the transmission of the optical signal by the transmission terminal of the optical proximity sensor and the reception of the reflected signal by the reception terminal; and achieve the effect of increasing the amount of the reflected signal received by the reception terminal to enable the optical proximity sensor to detect the nearby object within the entire LCD panel.

According to another embodiment, an electronic device is provided. For example, the electronic device may be a mobile phone, a computer, a digital broadcast terminal, a messaging device, a gaming console, a tablet, a medical device, an exercise equipment, a personal digital assistant, and the like. The electronic device includes the LCD component provided in the embodiments shown in Fig. 1 and 2.

Other embodiments of the invention will be apparent to those skilled in the art from consideration of the specification and practice of the disclosures herein. This application is intended to cover any variations, uses, or adaptations of the disclosure following the general principles thereof and including such departures from the present disclosure as come within known or customary practice in the art. It is intended that the specification and examples be considered as exemplary only, with the scope of the invention being indicated by the following claims.

It will be appreciated that the disclosure is not limited to the exact construction that has been described above and illustrated in the accompanying drawings, and that various modifications and changes can be made without departing from the scope thereof. It is intended that the scope of the invention only be limited by the appended claims.

## Claims

1. A liquid crystal display component, **characterized by** comprising: an upper substrate (110, 210); a lower substrate (120, 220) arranged to be opposite and parallel to the upper substrate (110,210); a liquid crystal layer (130, 230) encapsulated between the upper substrate (110, 210) and the lower substrate (120, 220); an upper polarizer (140, 240) attached to a surface of the upper substrate (110, 210) which is not adjacent to the liquid crystal layer (130, 230); and a lower polarizer (150, 250) attached to a surface of the lower substrate (120, 220) which is not adjacent to the liquid crystal layer (130, 230);
the liquid crystal display component further comprising: at least one optical proximity sensor (160, 260) and a control chip (170, 270);
wherein the at least one optical proximity sensor (160, 260) is arranged between the upper polarizer (140, 240) and the lower polarizer (150, 250), and each optical proximity sensor (160, 260) is electrically connected with the control chip (170, 270) respectively.

2. The liquid crystal display component of claim 1, wherein the upper substrate (210) comprises: an upper glass substrate (211) and a color filter (CF) (212);
wherein the lower surface of the upper glass substrate (211) is adjacent to the liquid crystal layer (230);
the CF (212) is attached to the upper surface of the upper glass substrate (211);
the CF (212) comprises pixel color blocks (212a) and a first black matrix (212b) distributed among the pixel color blocks (212a).

3. The liquid crystal display component of claim 1 or 2, wherein the lower substrate (220) comprises: a lower glass substrate (221) and a thin film transistor (TFT) array (222);
wherein the upper surface of the lower glass substrate (221) is adjacent to the liquid crystal layer (230);
the TFT array (222) and a second black matrix (223) distributed among the TFT array (222) are arranged on the lower surface of the lower glass substrate (221).

4. The liquid crystal display component of claims 2 or 3, wherein the optical proximity sensor (260) comprises at least one transmission terminal (261) and at least one reception terminal (262);
wherein the at least one transmission terminal (261) of the optical proximity sensor (260) is arranged on at least one of the first black matrix (212b) and the second black matrix (223), and the at least one reception terminal (262) of the optical proximity sensor (260) is arranged on at least one of the first black matrix (212b) and the second black matrix (223).

5. The liquid crystal display component of claim 4, wherein the optical proximity sensor (260) is connected with the control chip (270) via a wire (280), and the wire (280) is also arranged on the first black matrix (212b) or the second black matrix (223).

6. The liquid crystal display component of any one of claims 1 to 5, wherein there are n optical proximity sensors (160, 260), and the n optical proximity sensors (160, 260) are arranged evenly and dispersedly, wherein n≥2.

7. The liquid crystal display component of claim 6, wherein the crystal display component further comprises: at least one backlight source (290);
the at least one backlight source (290) being electrically connected with the control chip (270).

8. The liquid crystal display component of claim 7, wherein a display area corresponding to the liquid crystal display component is divided into m display blocks, each of the display blocks is arranged with at least one backlight source (290) correspondingly, and each of the display blocks is arranged with at least one optical proximity sensor (260) correspondingly, wherein m ≥ 2.

9. An electronic device, **characterized by** comprising the liquid crystal display component of any one of claims 1 to 8.
